## Europäisches Patentamt

## European Patent Office

## Office européen des brevets

(19)

(11) Veröffentlichungsnummer: **0 238 815**
**B1**

(12) **EUROPÄISCHE PATENTSCHRIFT**

(45) Veröffentlichungstag der Patentschrift:
**10.05.89**

(21) Anmeldenummer: **87101677.0**

(22) Anmeldetag: **06.02.87**

(51) Int. Cl.⁴: **F 16 K 31/42,** F 16 K 31/38, F 16 K 31/02, F 16 K 31/10

(54) **Regelventil.**

(30) Priorität: **22.03.86 DE 3609833**

(43) Veröffentlichungstag der Anmeldung:
**30.09.87 Patentblatt 87/40**

(45) Bekanntmachung des Hinweises auf die Patenterteilung:
**10.05.89 Patentblatt 89/19**

(84) Benannte Vertragsstaaten:
**DE ES FR IT SE**

(56) Entgegenhaltungen:
**EP-A-0 171 998
DD-A-213 736
DE-A-2 011 293
DE-A-2 227 228
DE-A-3 127 729
DE-A-3 244 297
DE-B-1 916 126
DE-B-1 921 166
GB-A-2 056 629
US-A-3 980 002
US-A-4 365 647
US-A-4 545 401**

(73) Patentinhaber: **Süddeutsche Kühlerfabrik Julius Fr. Behr GmbH & Co. KG, Mauserstrasse 3, D-7000 Stuttgart 30 (DE)**

(72) Erfinder: **Pigisch, Franz, Waldstrasse 27, D-7257 Ditzingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung bezieht sich auf ein Regelventil der im Oberbegriff des Anspruchs 1 angegebenen Gattung.

Ein Regelventil dieser Art ist beispielsweise aus der DE-OS-3 127 729 bekannt. Dieses Regelventil besteht jedoch aus einer Vielzahl von Einzelteilen, was zu einem hohen Herstellungs- und Montageaufwand und demzufolge zu hohen Herstellungskosten führt. Darüber hinaus ist eine Vielzahl von Verbindungsflächen vorhanden, die auf geeignete Weise abgedichtet werden müssen, damit das Druckmittel nicht entweichen kann.

Es ist daher die Aufgabe der Erfindung, ein Regelventil der im Oberbegriff des Anspruchs 1 genannten Gattung zu schaffen, das aus möglichst wenig und billig herstellbaren Einzelteilen besteht, nur einen geringen Bauraum benötigt, eine geringe Zahl abzudichtender Flächen aufweist und das gegen Druckstöße des hydraulischen Systems unempfindlich ist.

Diese Aufgabe wird bei einem Regelventil der bezeichneten Art durch die kennzeichnenden Merkmale des Anspruchs 1 gelöst. Die wesentlichen Vorteile der Erfindung sind darin zu sehen, daß das Regelventil aus äußerst wenigen, sehr einfach gestalteten Teilen besteht, einen geringen Bauraum benötigt und die Anzahl der Dichtflächen sowie Druckmittelanschlüsse auf ein Minimum reduziert ist. Darüber hinaus wird eine gute Anpassung an die gewünschte Regelkurve erreicht und ein Schwingen infolge von Druckstößen vermieden.

Im Bereich zwischen dem Hochdruckanschluß und dem ersten Druckmittelkanal sowie zwischen dem Hochdruckanschluß und der Dämpfungskammer muß die Hülse gegen das Gehäuse abgedichtet sein. Die Abdichtung kann auf geeignete Weise durch Passung in der Gehäusebohrung oder mittels eines Dichtungsringes erfolgen. Eine besonders einfache Ausgestaltung des Vorsteuerventils besteht darin, daß das Vorsteuerventil als Kegelventil ausgebildet ist, wobei das Ventilschließglied am Ende einer Betätigungsstange des elektromechanischen Stellgliedes angeformt und der Ventilsitz durch den Rand einer Bohrung in der Abschlußplatte gebildet ist. Durch diese Ausgestaltung ist erreicht, daß für das Vorsteuerventil keine zusätzlichen Teile benötigt werden, sondern die ohnehin vorhandenen Elemente, nämlich die Abschlußplatte und die Betätigungsstange benutzt werden.

Zur Befestigung des Regelventils und des elektromechanischen Stellgliedes an dem Hydromotor ist es zweckmäßig, daß die Hülse an ihrem dem Gehäuse des elektromechanischen Stellgliedes benachbarten Abschnitt mit einem Gewinde versehen und in ein entsprechendes Gewinde in der Gehäusebohrung des Hydromotors einschraubbar ist. Gemäß einer weiteren Ausgestaltung des Regelventils ist der Hochdruckanschluß des Regelventils über zweite radiale Öffnungen in der Hülse mit einem zwischen dieser und der Mantelfläche des Steuerkolbens gebildeten Ringraum verbunden, von dem die erste Drosselbohrung in die Steuerkammer und die zweite Drosselbohrung in die Dämpfungskammer führt.

Zweckmäßigerweise weist die Mantelfläche der Hülse im Bereich zwischen dem Gewindeabschnitt und den ersten radialen Bohrungen sowie im Bereich zwischen den zweiten radialen Öffnungen und dem Hochdruckanschluß jeweils einen geringeren Durchmesser auf als an den Enden und im mittleren Abschnitt und die durch diesen radialen Abstand zum Gehäuse gebildeten Ringräume dienen als erster und zweiter Druckmittelkanal. Auf diese Weise werden Druckmittelkanäle von ausreichend großem Durchtrittsquerschnitt geschaffen, ohne daß dafür ein zusätzlicher Bauraum beansprucht wird. Damit aus der Gehäusebohrung kein Druckmittel nach außen treten kann, ist zwischen dem Gehäuse des elektromechanischen Stellgliedes und dem Gehäuse des Hydromotors ein Dichtungsring angeordnet. Zur Führung der Betätigungsstange in dem Bereich der dem Ventilkegel benachbart ist, ist ein Ring vorgesehen, der die Betätigungsstange dichtend umschließt. Dadurch wird erreicht, daß der Ventilkegel stets mittig in der Bohrung der Abschlußplatte geführt wird und zentrisch am Ventilsitz anliegt.

Das elektromechanische Stellglied ist vorzugsweise ein Regelmagnet, dessen Betätigungsstange in Schließrichtung des Vorsteuerventils von einer Feder mit justierbarer Federkraft beaufschlagt ist. Durch die justierbare Federkraft kann der gewünschte Öffnungsdruck des Vorsteuerventils exakt eingestellt werden.

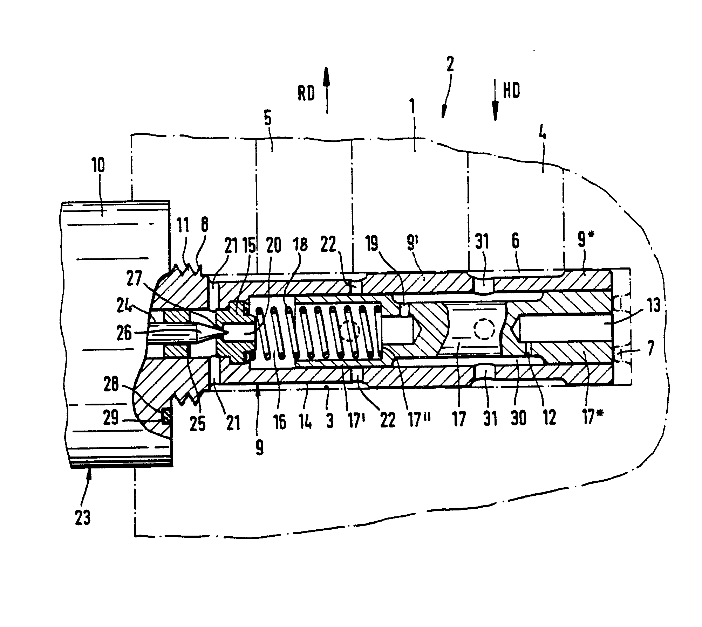

Ein Ausführungsbeispiel des erfindungsgemäßen Regelventils ist nachstehend anhand der Zeichnung, die einen Längsschnitt durch ein Regelventil zeigt, näher erläutert.

In einem Gehäuse 1 eines Hydromotors 2 ist eine Bohrung 3 vorhanden, zu der rechtwinklig, aber in axialem Abstand, ein Hochdruckanschluß 4 (HD) und eine Rücklaufbohrung 5 (RD) angeordnet sind. An ihrem äußeren Ende ist die Bohrung 3 mit einem Gewinde 8 versehen. In der Bohrung 3 befindet sich eine Hülse 9, die als Fortsatz eines Gehäuses 10 eines elektromechanischen Stellgliedes 23 ausgebildet und mit diesem einstückig ist. Die Hülse 9 weist in dem Bereich, der dem Gehäuse 10 benachbart ist einen Gewindeabschnitt 11 auf, so daß die Hülse 9 in das Gehäuse 1 des Hydromotors 2 einschraubbar ist, wodurch gleichzeitig das elektromechanische Stellglied 23 (Gehäuse 10) an dem Hydromotor 2 befestigt wird. Die Hülse 9 weist einen mittleren Abschnitt 9' und ein freies Ende 9* auf, die jeweils dichtend an der Wandung der Bohrung 3 anliegen.

Zwischen dem Gewindeabschnitt 11 und dem mittleren Abschnitt 9' sowie zwischen letzerem und dem freien Ende 9* weist die Hülse 9 jeweils eine Mantelfläche geringeren Durchmessers auf, so daß in diesem Abschnitt ein Abstand zu der Wandung der Bohrung 3 vorhanden ist, durch den ein erster Ringraum 14 und ein zweiter Ringraum 6 zwischen der Hülse 9 und dem Gehäuse 1 gebildet wird. In dem dem Gewindeabschnitt 11 benachbarten Bereich der Hülse 9 ist in dieser eine Abschlußplatte 15 angeordnet, die mit ihrer dem Innenraum der Hülse 9 zugewandten Fläche eine Steuerkammer 16 begrenzt, die auf der gegenüberliegenden Seite durch einen Steuerkolben 17 begrenzt wird, der mit seinen zylindrischen Endbereichen 17' und 17" dichtend in der Hülse 9 verschiebbar ist. Der Steuerkolben 17 wird mittels einer Steuerfeder 18, die an einer radialen Schulter 17" anliegt, gegen einen Anschlag 7 vorgespannt, wobei das andere Ende der Steuerfeder 18 an der Abschlußplatte 15 abgestützt ist. Von dem zweiten Ringraum 6 führen zweite radiale Öffnungen 31 in einen dritten Ringraum 30, der zwischen den zylindrischen Endbereichen 17' und 17" des Steuerkolbens 17 an dessen Mantelfläche gebildet ist. Der Steuerkolben 17 weist eine erste Drosselbohrung 19 auf, durch die der Ringraum 30 mit der Steuerkammer 16 in Verbindung steht. Außerdem ist im Steuerkolben 17 eine zweite Drosselbohrung 12 vorhanden, die in eine Dämpfungskammer 13 führt, welche von einer Stirnseite des Steuerkolbens 17 begrenzt wird.

Die Abschlußplatte 15 weist eine axiale Bohrung 20 auf, die von der Steuerkammer 16 auf die dem elektromechanischen Stellglied zugewandte Seite der Abschlußplatte 15 führt. Die Hülse 9 ist in dem Bereich, der unmittelbar vor dem Gewindeabschnitt 11 liegt mit zwei radialen Kanälen versehen, die im Bereich der Rücklaufbohrung 5 liegen. In dem Bereich des ersten Ringraumes 14, der dem mittleren Abschnitt 9' benachbart ist, weist die Hülse 9 radiale Öffnungen 22 auf, die die Innenseite der Hülse 9 mit dem Ringraum 14 verbinden.

Das elektromechanische Stellglied 23 besitzt eine Betätigungsstange 24 die axial verschiebbar und in einem Ring 25 dichtend geführt ist. Das Ende der Betätigungsstange 24 ist kegelförmig ausgebildet und dient als Ventilschließglied 26, das in der Schließstellung des Vorsteuerventils an dem als Ventilsitz 27 dienenden Rand der Bohrung 20 anliegt. Das Gehäuse 10 des elektromechanischen Stellgliedes 23 weist an der am Gehäuse anliegenden Stirnfläche eine Ringnut 28 auf, in der ein Dichtungsring 29 vorgesehen ist.

Die Wirkungsweise des in der Zeichnung dargestellten Regelventils wird nachfolgend beschrieben.

Wird dem Hochdruckanschluß 4 der Pumpendruck eines hydrostatischen Kreislaufs zugeführt, so gelangt dieser Druck durch den zweiten Ringraum 6 und die radialen Öffnungen 31 in den dritten Ringraum 30. Durch die Drosseln 19 und 12 stellt sich mit zeitlicher Verzögerung dieser Druck auch in der Steuerkammer 16 und in der Dämpfungskammer 13 ein. Aufgrund gleicher druckbeaufschlagter Flächen wirkt zuzunächst nur die Kraft der Steuerfeder 18 in Schließrichtung des Regelventils, so daß die ersten radialen Öffnungen 22 durch den Steuerkolben 17 verschlossen sind. Der Hydromotor 2 wird in dieser Stellung vom gesamten Druckmittelstrom beaufschlagt und - eine entsprechenden Pumpenleistung vorausgesetzt - mit seiner maximalen Drehzahl betrieben.

Aufgrund eines entsprechenden elektrischen Signals wird die Spule des elektromechanischen Stellgliedes 23, vorzugsweise einem Regelmagnet, erregt - und in der Zeichnung gesehen nach links - bewegt, wodurch das Ventilschließglied 26 von dem Ventilsitz 27 abgehoben wird. Ist das Vorsteuerventil geöffnet, so kann Druckmittel aus der Steuerkammer 16 durch die Bohrung 20 in der Abschlußplatte 15 sowie durch die radialen Bohrungen 21 in den Rücklaufkanal 5 entweichen. Die Verringerung des Druckes in der Steuerkammer 16 hat zur Folge, daß der Steuerkolben 17 gegen die Steuerfeder 18 verschoben wird und damit den Bypass zwischen der dem Hochdruckanschluß 4 und der Rücklaufbohrung 5 öffnet. Wieweit der Durchtrittsquerschnitt des Bypasses an den radialen Öffnungen 22 in der Hülse 9 geöffnet wird, ist abhängig von dem Öffnungsquerschnitt des aus 26 und 27 gebildeten Vorsteuerventils, das den Druckabbau in der Steuerkammer 16 beeinflußt.

Da durch die Drosselbohrung 19 ständig Druckmittel von der Hochdruckseite in die Steuerkammer 16 nachgeführt wird, muß - um den Steuerkolben 17 in einer bestimmten Regelstellung zu halten - eine entsprechende Druckmittelmenge durch das Vorsteuerventil abgeführt werden. Wird der Regelmagnet 23 stromlos, was insbesondere im Falle einer Störung der elektrischen Anlage eintritt, so wird die Betätigungsstange 24 in Richtung auf die Abschlußplatte 15 bewegt, so daß das Ventilschließglied 26 durch Anlage an den Ventilsitz 27 das Vorsteuerventil schließt. Dadurch wird der Druck in der Steuerkammer 16 auf seinen höchsten Wert und der Steuerkolben 17 in der Schließposition gehalten.

In der Dämpfungskammer 13 herrscht der gleiche Druck wie im Hochdruckanschluß 4, jedoch werden plötzliche Druckänderungen, die aufgrund von Störeinflüssen auftreten, erst mit seitlicher Verzögerung in der Dämpfungskammer 13 wirksam, so daß dort ein Druckpegel herrscht, der gegenüber der systembedingten Pulsation auf der Hochdruckseite geglättet ist.

## Patentansprüche

1. Regelventil welches in Abhängigkeit eines elektrischen Signals eine Ventilöffnung steuert, durch den der Druckmittelstrom beeinflußbar ist, wobei das Regelventil einen eine Steuerkammer begrenzenden und in Schließrichtung des Ventils von einem Steuerdruck und einer Steuerfeder beaufschlagten Steuerkolben in dem eine einen Hochdruckanschluß mit der Steuerkammer verbindende erste Drossel angeordnet ist, sowie ein den Steuerdruck beeinflussendes Vorsteuerventil, das von einem elektromagnetischen Stellglied betätigt wird, umfaßt, der Steuerkolben in einer Hülse, die eine innerhalb der Hülse dichtend befestigte Abschlußplatte aufweist, dichtend geführt ist und die Hülse erste radiale Öffnungen aufweist, die zu einen entlang der Mantelfläche der Hülse verlaufenden ersten Druckmittelkanal führen, und die Hülse in dem zwischen dem Hochdruckanschluß und den ersten radialen Öffnungen befindlichen Bereich dichtend in einem Ventilgehäuse eingesetzt ist dadurch gekennzeichnet, daß die Hülse (9) als Fortsatz des Gehäuses (10) des elektromechanischen Stellgliedes (23) einstückig mit diesem ausgebildet ist, daß das Regelventil in einer Gehäusebohrung (3) eines Hydromotors (2) oder in dessen Anschlußplatte zwischen Hochdruckanschluß (4) und Rücklaufleitung (5) angeordnet ist, und daß die der Steuerkammer (16) entfernt liegende Stirnseite des Steuerkolbens (17) eine Dämpfungskammer (13) begrenzt, die über eine zweite Drossel (12) mit dem Hochdruckanschluß (4) verbunden ist.

2. Regelventil nach Anspruch 1, dadurch gekennzeichnet, daß die Hülse (9) im Bereich zwischen dem Hochdruckanschluß (4) und dem ersten Druckmittelkanal (Ringraum 14) sowie zwischen dem Hochdruckanschluß (4) und der Dämpfungskammer (13) durch Passung in der Gehäusebohrung (3) oder mittels Dichtungsringen abgedichtet ist.

3. Regelventil nach Anspruch 1 oder 2, dadurch gekennzeichnet, daß das Vorsteuerventil (26, 27) als Kegelventil ausgebildet ist, wobei das Ventilschließglied (26) am Ende einer Betätigungsstange (24) des elektomechanischen Stellgliedes (23) angeformt ist.

4. Regelventil nach einem der vorhergehenden Ansprüche, dadurch gekennzeichnet, daß die Hülse in ihrem dem Gehäuse (10) des elektromechanischen Stellgliedes (23) benachbarten Abschnitt mit einem Gewinde (11) versehen und in ein entsprechendes Gewinde (8) der Gehäusebohrung (3) des Hydromotors (2) einschraubbar ist.

5. Regelventil nach Anspruch 4, dadurch gekennzeichnet, daß zwischen Abschlußplatte (15) und dem Gewindeabschnitt (11) mindestens ein radialer Kanal angeordnet ist, der in den ersten Druckmittelkanal (Ringraum 14) mündet.

6. Regelventil nach Anspruch 4, dadurch gekennzeichnet, daß der Hochdruckanschluß (4) über zweite radiale Öffnungen (31) in der Hülse (9) mit einem zwischen dieser und der Mantelfläche des Steuerkolbens (17) gebildeten dritten Ringraum (30) verbunden ist, von dem die erste Drosselbohrung (19) in die Steuerkammer (16) und die zweite Drosselbohrung (12) in die Dämpfungskammer (13) führt.

7. Regelventil nach Anspruch 6, dadurch gekennzeichnet, daß die Mantelfläche der Hülse (9) im Bereich zwischen dem Gewindeabschnitt (11) und den ersten radialen Öffnungen (22) sowie im Bereich zwischen den zweiten radialen Öffnungen (31) und dem Hochdruckanschluß (4) jeweils einen geringeren Durchmesser aufweist als an den Enden und im mittleren Abschnitt und die durch radialen Abstand zum Gehäuse (1) gebildeten Ringräume (14, 6), als erster und zweiter Druckmittelkanal dient.

8. Regelventil nach einem der vorhergehenden Ansprüche, dadurch gekennzeichnet, daß zwischen dem Gehäuse (10) des elektromechanischen Stellgliedes (23) und dem Gehäuse (1) des Hydromotors (2) ein Dichtungsring (29) angeordnet ist.

9. Regelventil nach Anspruch 3, dadurch gekennzeichnet, daß die Betätigungsstange (24) in dem Bereich, der dem Ventilschließglied (26) benachbart ist, mittels eines Ringes (25) dichtend geführt ist.

10. Regelventil nach Anspruch 3, dadurch gekennzeichnet, daß das elektromechanische Stellglied (23) ein Regelmagnet ist und die Betätigungsstange (24) in Schließrichtung des Vorsteuerventils (26, 27) von einer Feder mit justierbarer Federkraft beaufschlagt ist.

**Claims**

1. Control valve which, depending upon an electric signal, actuates a valve opening by means of which the flow of pressure medium may be influenced, the control valve comprising a control piston delimiting a control chamber and impingeable in the closing direction of the valve by an actuating pressure and a control spring, in which piston a first throttle is mounted which connects a high pressure connection with the control chamber, and comprising also a pilot valve influencing the actuating pressure and actuated by an electromagnetic actuator, whereas the control piston is guided seal-tightly in a sleeve which has a closure plate seal-tightly secured inside the sleeve, and the sleeve has first radial openings which lead to a first pressure medium channel extending along the surface area of the sleeve, and the sleeve is seal-tightly mounted in a valve chamber in the region situated between the high pressure connection and the first radial openings, characterized in that the sleeve (9) is constructed as an extension of the housing (10) of the electro-mechanical actuator (23) as one piece with the latter, in that the control valve is mounted in a housing opening (3) of a hydromotor (2) or in the connection plate of the latter between the high pressure connection (4) and the return duct (5), and in that the front side of the control piston (17) situated away from the control chamber (16) delimits a damping chamber (13) connected via a second throttle (12) with the high pressure connection (4).

2. Control valve according to claim 1, characterized in that the sleeve (9) is sealed in the region between the high pressure connection (4) and the first pressure medium channel (annular space 14) as well as between the high pressure connection (4) and the damping chamber (13) by close fitting in the housing opening (3) or by means of sealing rings.

3. Control valve according to claim 1 or 2, characterized in that the pilot valve (26, 27) is constructed as a cone valve, the valve closing member (16) being swaged at the end of an actuating rod (24) of the electro-mechanical actuator (23).

4. Control valve according to one of the foregoing claims, characterized in that the sleeve in its portion adjacent to the housing of the electro-mechanical actuator (23) is provided with a thread (11) and is able to be screwed into a corresponding thread (8) of the housing opening (3) of the hydromotor (2).

5. Control valve according to claim 4, characterized in that between the closure plate (15) and the thread portion (11) at least one radial channel is provided which opens out into the first pressure medium channel (annular space 14).

6. Control valve according to claim 4, characterized in that the high pressure connection (4) is connected via second radial openings (31) in the sleeve (9) with a third annular space (30) formed between the latter and the surface area of the control piston (17), from which annular space the first throttle opening (19) leads into the control chamber (16) and the second throttle opening (12) leads into the damping chamber (13).

7. Control valve according to claim 6, characterized in that the surface area of the sleeve (9) in the region between the thread portion (11) and the first radial openings (22), as well as in the region between the second radial openings (31) and the high pressure connection (4) has in each instance a smaller diameter than at the ends and in the middle portion, and the annular spaces (14, 6) formed by radial distance from the housing (1) act as first and second pressure medium channels.

8. Control valve according to one of the foregoing claims, characterized in that a sealing ring (29) is mounted between the housing (10) of the electro-mechanical actuator (23) and the housing (1) of the hydromotor (2).

9. Control valve according to claim 3, characterized in that the actuation rod (24) is guided seal-tightly by means of a ring (25) in the region adjacent to the valve closure member (26).

10. Control valve according to claim 3, characterized in that the electro-mechanical actuator (23) is a control magnet and the actuation rod (24), in the closing position of the pilot valve (26, 27) is impinged by a spring with adjustable spring force.

**Revendications**

1. Soupape de réglage qui commande une ouverture de soupape en fonction d'un signal électrique, et par laquelle le courant d'un fluide de pression peut être influencé, la soupape de réglage comprenant un piston de commande qui délimite une chambre de commande, est sollicitée vers la position de fermeture de la soupape par une pression de commande et par un ressort de commande, et dans laquelle est prévu un premier étranglement qui relie un raccord de haute pression à la chambre de commande, ainsi qu'une soupape pilote qui influe sur la pression de commande et qui est actionnée par un actionneur électromagnétique, le piston de commande est guidé à joint étanche dans une fourrure qui présente une plaque obturatrice fixée à joint étanche à l'intérieur de cette fourrure, et la fourrure présente des premières ouvertures radiales qui mènent à un premier conduit de fluide de pression qui s'étend le long de la surface latérale de la fourrure, et la fourrure est montée à joint étanche dans un corps de soupape, dans la région qui est située entre le raccord de haute pression et les premières ouvertures radiales, caractérisée en ce que la fourrure (9) est constituée par un prolongement du boîtier (10) de l'actionneur électromécanique (23), d'une seule pièce avec ce boîtier, en ce que la soupape de réglage est agencée dans un alésage (3) du carter d'un moteur hydraulique (2), ou dans la plaque de fermeture de ce carter, entre le raccord de haute pression (4) et la conduite de retour (5), et en ce que la face frontale du piston de commande (17) qui est la plus éloignée de la chambre de commande (16) délimite une chambre d'amortissement (13) qui est reliée au raccord de haute pression (4) par l'intermédiaire d'un deuxième étranglement (12).

2. Soupape de réglage selon la revendication 1, caractérisée en ce que la fourrure (9) est montée à joint étanche, dans la région comprise entre le raccord de haute pression (4) et le premier conduit de haute pression (chambre annulaire 14), ainsi qu'entre le raccord de haute pression (4) et la chambre d'amortissement (13), par ajustement dans l'alésage (3) du carter ou au moyen de bagues d'étanchéité.

3. Soupape de réglage selon la revendication 1 ou 2, caractérisée en ce que la soupape pilote (26, 27) est constituée par une soupape à pointeau, l'organe obturateur (26) de la soupape étant formé à l'extrémité d'une tige d'actionnement (24) de l'actionneur électromécanique (23).

4. Soupape de réglage selon l'une des revendications précédentes, caractérisée en ce que la fourrure est munie d'un filetage (11) dans son segment adjacent au boîtier (10) de l'actionneur électromécanique (23) et se visse dans un filetage correspondant (8) de l'alésage (3) du carter du moteur hydraulique (2).

5. Soupape de réglage selon la revendication 4, caractérisée en ce que, entre la plaque obturatrice (15) et le segment fileté (11), est prévu au moins un conduit radial qui débouche dans le premier conduit de fluide de pression (chambre annulaire 14).

6. Soupape de réglage selon la revendication 4, caractérisée en ce que le raccord de haute pression (4) est relié par des deuxièmes ouvertures radiales (31) ménagées dans la fourrure (9), à une troisième chambre annulaire (30) formée entre cette fourrure et la surface latérale du piston de commande (17), chambre d'ou le premier perçage d'étrangement (19) mène dans la chambre de commande (16) et le deuxième perçage d'étranglement (12) dans la chambre d'amortissement (13)

7. Soupape de réglage selon la revendication 6, caractérisée en ce que la surface latérale de la fourrure (9) présente, dans la région comprise entre le segment fileté (11) et les premières ouvertures radiales (22), de même que dans la région comprise entre les deuxièmes ouvertures radiales (31) et le raccord de haute pression (4), un plus petit diamètre qu'aux extrémités et que dans le segment central et les chambres annulaires (14, 6) formées par l'espacement radial qui sépare cette surface du carter (1) servent respectivement de premier et de deuxième conduits de fluide de pression.

8. Soupape de réglage selon l'une des revendications précédentes, caractérisée en ce qu'une bague d'étanchéité (29) est disposée entre le boîtier (10) de l'actionneur électromécanique (23) et le carter (1) du moteur hydraulique (2).

9. Soupape de réglage selon la revendication 3, caractérisée en ce que la tige d'actionnement (24) est guidée à joint étanche au moyen d'une bague (25) dans la région qui est adjacente à l'organe obturateur (26) de la soupape.

10. Soupape de réglage selon la revendication 3, caractérisée en ce que l'actionneur électromécanique (23) est un électro-aimant de réglage et la tige d'actionnement (24) est sollicitée dans le sens de la fermeture de la soupape pilote (26, 27) par un ressort à force élastique réglable.